# EUROPÄISCHE PATENTSCHRIFT

(11) **EP 0 659 531 B1**
(45) Veröffentlichungstag und Bekanntmachung des Hinweises auf die Patenterteilung: **17.05.2000**
(21) Anmeldenummer: 94120043.8
(22) Anmeldetag: 17.12.1994
(51) Int. Cl.: B29C 43/22, B29D 11/00

(54) **Verfahren zur Extrusion von Kunststofftafeln und daraus hergestellte Fresnel-Linsen**
Process for extrusion of plastic plates and Fresnel lenses produced therefrom
Procédé pour l'extrusion des plaques en polymère et lentilles Fresnel produits

(30) Priorität: 24.12.1993 DE 4344392; 24.12.1993 DE 9319928 U; 05.03.1994 DE 4407468
(43) Veröffentlichungstag der Anmeldung: 28.06.1995
(73) Patentinhaber: Röhm GmbH, 64293 Darmstadt (DE)
(72) Erfinder: Benz, Volker, Dr., D-64739 Höchst (DE); Berkenkopf, Martin, D-64319 Pfungstadt (DE); Fischer, Udo, Dr. Ing. Dipl.-Ing., D-64297 Darmstadt (DE); Lorenz, Hans, D-64291 Darmstadt (DE); Meier-Kaiser, Michael Dr., D-64319 Pfungstadt (DE)

(56) Entgegenhaltungen:
- EP-A- 0 484 797
- WO-A-93/23244
- US-A- 3 146 492
- US-A- 3 241 429
- US-A- 4 543 225
- PATENT ABSTRACTS OF JAPAN vol. 8, no. 210 (M-328) 26. September 1984 & JP-A-59 097 457 (SHINENERUGII SOUGOU KAIHATSU KIKOU) 5. Juni 1984
- PATENT ABSTRACTS OF JAPAN vol. 6, no. 43 (M-117) 17. März 1982 & JP-A-56 157 319 (DAINIPPON INSATSU)

## Beschreibung

### Gebiet der Erfindung

Die Erfindung betrifft ein Verfahren zur Extrusion von Kunststoff-Tafeln mit sehr fein strukturierter Oberfläche, insbesondere ein Verfahren zur Herstellung linearer Fresnel-Linsen und diese enthaltende Sonnenkollektoren.

### Stand der Technik

Unter verschiedenen Gesichtspunkten hat die Technik Verfahren zur Strukturierung von Kunststoff-Oberflächen entwickelt, soweit sich der Kunststoff dafür eignet. Beispielsweise bei Thermoplasten wird eine Strukturierung der Oberfläche vorzugsweise durch Einwirkung eines Prägewerkzeugs auf die im entsprechenden Temperaturzustand befindliche Oberfläche erreicht. (Becker-Braun, Kunststoff-Handbuch, Bd. 1, 543 - 544, Hanser-Verlag 1990; K. Stockhert, Veredeln von Kunststoffoberflächen, Hanser 1975). Im Handel befindet sich u.a. Kunststoff-Tafelmaterial auf PMMA-Basis mit charakteristisch strukturierten Oberflächen. Diese werden u.a. durch Extrusion bei gleichzeitiger Prägung in einem Drei-Walzen-Glättwerk (Kalander) hergestellt. Dabei ist eine Walze (Prägewalze) mit dem Negativ der gewünschten Plattenstruktur versehen. Das Ziel ist bei strukturierten Platten eine möglichst gute Abbildung der Walzenstruktur. Man erreicht dieses Ziel durch Einstellen einer möglichst niedrigen Schmelzeviskosität und einer möglichst hohen Walzentemperatur. Desweiteren sollte - wie die Praxis zeigt - das Druckmaximum vor der engsten Stelle im Walzenspalt (d.h. dem Spalt zwischen glatter und strukturierter Walze) hoch sein, um möglichst viel Prägekraft übertragen zu können. Aus den drei genannten Bedingungen ergeben sich unabwendbar Kompromisse bei der technischen Durchführung der Extrusion strukturierter Tafeln.

Patent Abstracts of Japan, vol. 6, no. 43 (M-117, & JP-A 56 157 319) offenbart ein Verfahren zur Herstellung von Fresnellinsen durch Laminierung einer extrudierten Kunststoffbahn mit einer Kunststoff-Folie. Das Verfahren der Koextrusion wird nicht erwähnt.

Patent Abstracts of Japan, vol. 8, no. 210 (M-328, & JP-A 59 097 457) beschreibt einen Solarkollektor, bei dem die Sonnenstrahlen mittels einer Fresnellinse auf Solarzellen fokussiert werden, welche rückwärtig gekühlt werden.

### Aufgabe und Lösung

Die Herstellung von Kunststoffplatten mit strukturierten Oberflächen nach dem Verfahren des Standes der Technik stößt insbesondere da an ihre Grenzen, wo besonders hohe Anforderungen hinsichtlich Feinheit und Genauigkeit der Struktur gestellt werden.

Die Möglichkeit der Anpassung der geschilderten Randbedingungen sind limitiert: Die Walzentemperatur kann nicht beliebig erhöht werden, da die meisten Kunststoffschmelzen an heißen Metallen kleben. Diese Klebetendenz führt ab einer gewissen Walzentemperatur zu Ablöseschwierigkeiten an der Prägewalze. Die Schmelzeviskosität des Kunststoffs kann nicht beliebig niedrig gewählt werden, etwa durch Einstellung hoher Schmelzetemperaturen, da sonst die Prägekraft im Walzenspalt zu gering wird.

Die Abbildegenauigkeit von Tafeln, die nach diesem Verfahren und mit diesen Einschränkungen produziert werden, ist - wie bereits ausgeführt - für gewisse Anwendungen nicht gut genug, d.h. feine Strukturen werden nicht richtig ausgeformt oder verrunden.
Derartig fein ausgeformte Oberflächenstrukturen stellen aber eine notwendige Voraussetzung für interessante technische Anwendungen dar.
Auf verschiedenen Anwendungsgebieten der technischen Optik kommt es häufig darauf an, das von einer Lichtquelle ausgehende Licht zu bündeln. Man verwendet dafür im allgemeinen geeignet dimensionierte optische Linsen. Um ein paralleles Lichtbündel zu erzeugen, sollte die Lichtquelle im Brennpunkt der Linse stehen. Je kleiner der Abstand zwischen Lichtquelle und Linse, desto mehr Licht wird gesammelt. Dies führt in der Praxis zu Linsen mit kurzer Brennweite und dementsprechend großer Dicke.

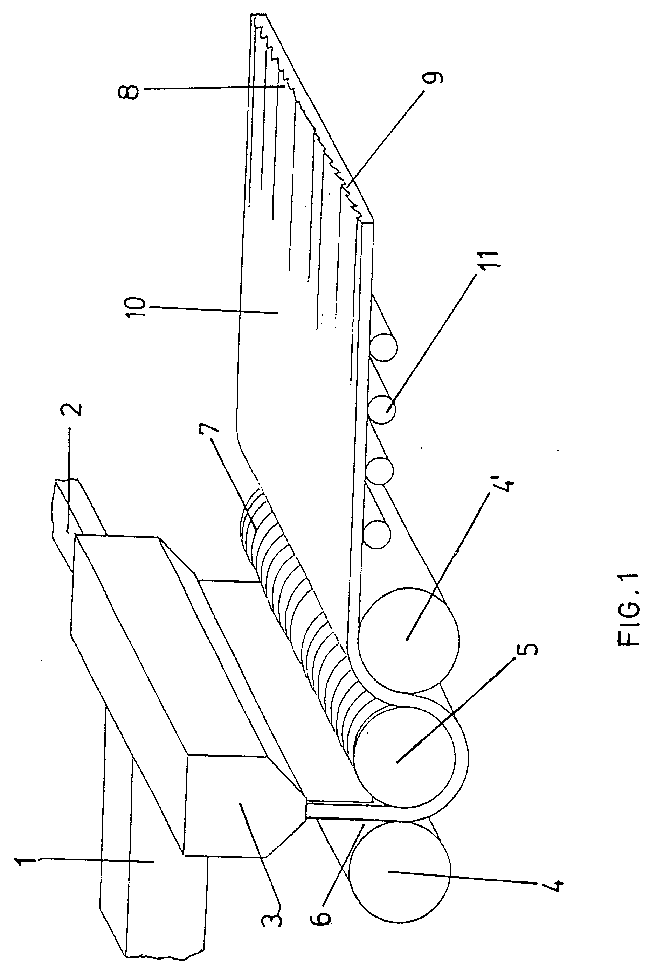

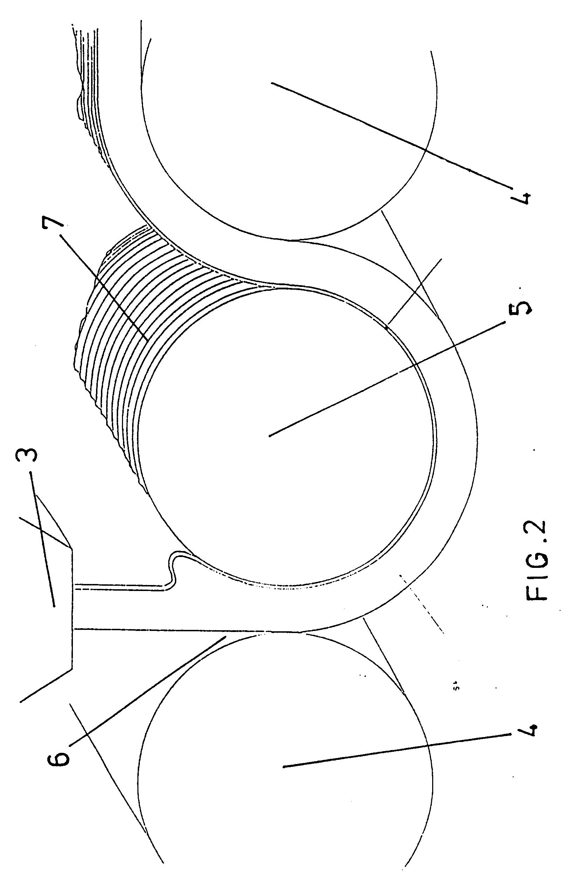

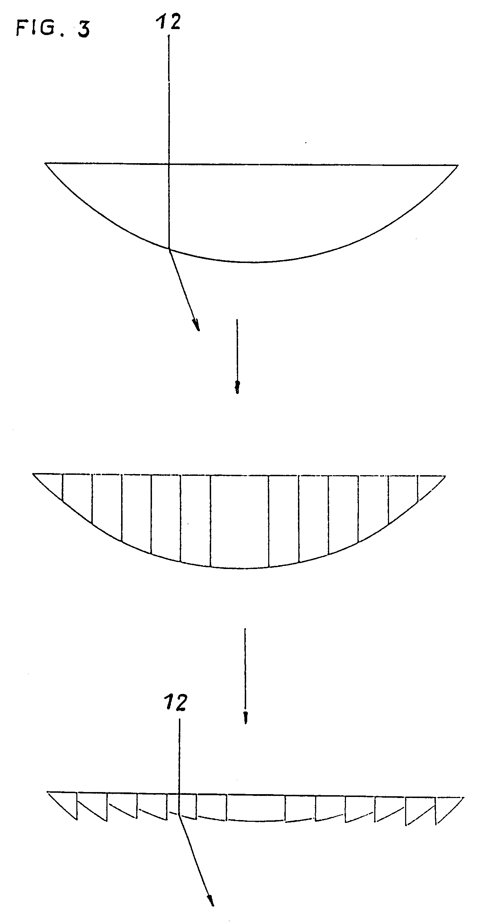

Von A. Fresnel, stammt die Erkenntnis, daß sich Linsenwirkung auch dann ergibt, wenn man anstelle der geschlossenen konvexen Oberfläche der Linse konzentrischringförmige "Stufen" mit vergleichbarer Oberflächenkrümmung setzt.
Bei den Fresnel-Linsen handelt es sich demnach um sogenannte Stufenlinsen. Man kann sie aus einer normalen Linse durch Unterteilung der Linse in Segmente und Parallelverschiebung einer Oberfläche jedes Segments entstanden denken (vgl. FIG. 3).
Durch die Anwendung dieses Prinzips ist es möglich, eine Linse mit hoher Brechkraft (kleiner Brennweite) und geringer Dicke zu bauen. Fresnel-Linsen können als circulare und als lineare (Zylinder-)Linsen gebaut werden. Bekannte technische Anwendungen für Fresnel-Linsen sind z.B. bei Projektionsschirmen, Overheadprojektoren, Filter für Bühnenscheinwerfer, Rundumsichtlinsen für Rückscheiben von Fahrzeugen wie Lieferwagen oder Wohnmobilen, Linsen für Leuchtfeuer u.ä.
Es bestand daher die Aufgabe, ein Verfahren zur Herstellung von Tafeln mit strukturierter Oberfläche zur Verfügung zu stellen, das den genannten Anforderungen, wie hohe Abbildegenauigkeit der Prägewalze bei sehr feiner Struktur der Oberfläche, genügt.
Bei dem erfindungsgemäßen Verfahren werden die oben genannten Randbedingungen, hohe Walzentemperatur, niedrige Schmelzviskosität und hohe Prägekraft im Walzenspalt, konsequent verwirklicht.
Die Erfindung betrifft ein Verfahren zur Extrusion von Kunststoff-Tafeln mit sehr fein strukturierter Oberfläche mittels einer, mit zwei Extrudern und einem Drei-Walzen-Glättwerk, enthaltend eine Walze mit der strukturierten Oberfläche (Prägewalze), ausgestatteten Extrusionsanlage, deren Extruder zur Coextrusion ausgelegt sind und das Tafelmaterial als ein Coextrudat CX aus einer hochviskosen Basisformmasse BF und darauf aufextrudiert einer niedrigviskosen, vorzugsweise mit an sich bekannten Trennmitteln TM versehenen Formmasse NF hergestellt und über das Drei-Walzen-Glättwerk oberflächlich strukturiert wird. (Eine geeignete Extrusionsanlage ist in den Figuren 1 und 2 dargestellt). Dabei sollte die aus der Formmasse NF gebildete Coextrudatschicht die maximale Tiefe der Walzenstruktur nicht überschreiten. Als charakteristisch für das Schmelz-Viskositätsverhalten wird allgemein der Schmelzindex (Melt Flow Index = MFR, gemäß DIN 57 735 bzw. ASTM 1238-70) angegeben. Durch die Verwendung der hochviskosen Formmasse BF als Trägermaterial wird die nötige Prägekraft gewährleistet.

Als thermoplastische Kunststoffe kommen Polyacrylate, insbesondere PMMA, Polycarbonat, Polyolefine, LDPE, HDPE, PP, Polyethylenterephtalat, PVC, Polystyrol, Polyamid infrage. Die niedrigviskose Formmasse NF kann vorteilhaft aus denselben Kunststofftypen bestehen, wie die Basisformmasse BF, sie kann aber auch aus einem mit diesem hinreichend kompatiblen Kunststoff bestehen. (Vgl. J.E. Johnson, Kunststoffberater 10, 538-541 (1976)). Als Regel kann gelten, daß die Schmelzviskosität des Coextrusionsmaterials NF der einer Spritzgußmasse für hohe Abbildegenauigkeit entsprechen soll.
Das Verhältnis der Schmelzviskositätsindices MFR für die Formmassen BF und NF beträgt ca. 1 : 10.
Es gilt, wie bereits ausgeführt, daß die Dicke der Coextrusionsschicht - gebildet aus Formmasse NF - in der Regel die maximale Tiefe der Walzenstruktur nicht überschreiten soll. Daraus ergeben sich in erster Näherung die Relationen der Schichtdicken aus BF und NF. Die Abbildung der Strukturwalze geschieht somit üblicherweise nur in der coextrudierten Schicht. Die vorteilhafterweise mit der Formmasse NF eingesetzten Trennmittel TM gehören ebenfalls dem Stand der Technik an (vgl. H.F. Mark et al. Encyclopedia of Polymer Science & Engineering, Index Volume pg. 307 - 324, J. Wiley 1990; Ullmann's Encyclopedia of Industrial Chemistry, 5th Ed. Vol. A20, pg. 479 - 483, VCH 1992; R. Gaechter, H. Müller Kunststoffadditive, 3. Aufl. Carl Hanser Verlag 1989). Vorzugsweise liegt der Gehalt der mit der Formmasse NF eingesetzten Trennmittel TM im Bereich 0 bis 0,34 Gew.-% bezogen auf die Formmassen NF. Genannt seien insbesondere höhere Alkohole.

Durch die Verwendung eines Trennmittels in der Formmasse NF sinkt die Klebeneigung der Schmelze an heißem Metall.
Die Strukturwalzentemperatur kann daher bei dem Prägeverfahren erheblich erhöht werden. Als Anhalt seien bis zu 70 Grad C über der Glastemperatur Tg der Formmasse NF genannt. (Die Glastemperaturen Tg sind bekannt bzw. können rechnerisch ermittelt oder bestimmt werden. (Vgl. Brandrup-Immergut, Polymer Handbook, Chapter V, J. Wiley, Vieweg-Esser, Kunststoff-Handbuch Bd. IX, 333 - 340, Carl Hanser 1975).

Die zur Herstellung der aus der Basisformmasse BF und der niedrigviskosen Formmasse NF aufgebauten, vorzugsweise mit Trennmittel TM versehenen Coextrudate CX in Plattenform geeignete Extrusionstechnologie ist an sich bekannt (vgl. J.E. Johnson, Kunststoffberater, 10, 538 - 5412 (1976), H.F. Mark et al. Encyclopedia of Polymer Science and Engineering Vol. 6, 608 - 613 J. Wiley 1986; Ullmann's Encyclopedia of Industrial Chemistry Vol. A20, pg. 479 - 483, VCH 1992; H. Batzer, Polymere Werkstoffe Bd. II, 134 - 137, 142, Georg Thieme 1984, Bd. III, 244 - 251, Georg Thieme 1984; EP 210 138).
Der Aufbau und die Funktionsweise der Extrusionsanlage werden in den Figuren 1 und 2 illustriert. Die Herstellung mehrschichtiger Kunststofftafeln ist z.B. aus DE-A 32 44 953, US-A 4 477 521 bekannt.
Von besonderem Interesse ist die technische Herstellung linearer Fresnel-Linsen nach dem erfindungsgemäßen Verfahren. Die Herstellung von Fresnel-Linsen aus geeigneten transparenten Kunststoffen geschieht bisher vorwiegend mittels Spritzguß, im Prägeverfahren oder durch spangebende Bearbeitung.

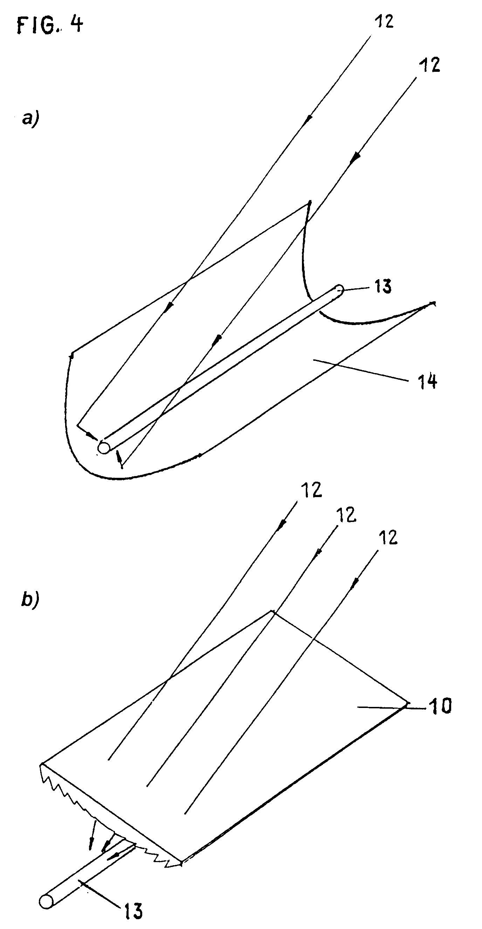

Bei allen Anwendungen, bei denen bislang transparente Kunststoffe, sog. Kunststoff-Gläser, für Fresnel-Linsen zum Einsatz kamen - an erster Stelle wäre dabei Acrylglas (im wesentlichen Polymethylmethacrylat = PMMA) zu nennen - handelt es sich um Anwendungen mit hohen Anforderungen an die Auflösung und dementsprechend großen Fertigungsproblemen. (Vgl. Becker-Braun, Kunststoff-Handbuch, Neuausgabe Bd. 1, Die Kunststoffe S. 775 - 776, Carl Hanser 1990).
Die bevorzugte Ausgestaltung der Erfindung geht u.a. auf die Erkenntnisse zurück, daß sich transparente Kunststoffplatten mit **linearer** Fresnel-Struktur, insbesondere Acrylglas-Platten hervorragend als lichtsammelnde Elemente in Sonnenkollektoren nutzen lassen. Es bestand somit die weitere Aufgabe, transparente Kunststoffplatten, vorzugsweise aus Acrylglas mit **linearer** Fresnel-Struktur, hergestellt nach einer möglichst einfachen günstigen Verfahrensweise, zur Verfügung zu stellen.
Unter einer linearen Fresnel-Struktur wird eine Oberflächengestaltung verstanden, bei der die oben beschriebenen Fresnel-Zonen linear und parallel angeordnet sind. (FIG. 3 und 4).
Erfindungsgemäß wird somit ein Verfahren zur Herstellung von linearen Fresnel-Linsen aus extrudierbarem thermoplastischem Kunststoff zur Verfügung gestellt, wobei man die Fresnel-Linsen im Extrusionsverfahren auf der Extrusionsanlage, wie oben beschrieben (FIG. 1 und 2), erzeugt. Dabei besitzt die Prägewalze eine der abzuformenden Linsenoberflächen entsprechende Oberflächenstruktur.

Die vorliegende Erfindung betrifft desweiteren die Verwendung der linearen Fresnel-Linsen als lichtsammelnde Elemente von Sonnenkollektoren. Die vorliegende Erfindung kann hinsichtlich des Aufbaus der Sonnenkollektoren an bestehende Sonnenkollektoren-Systeme (FIG. 4a) anschließen. Dabei dienen als Licht-Kollektor-Einheiten lineare Parabolspiegel aus bedampftem Glas (14), in deren Brennlinie ein Rohr (13) fixiert ist, das von einer Wärmeträgerflüssigkeit durchströmt wird.
Erfindungsgemäß enthalten die Sonnenkollektoren (FIG. 4b) mindestens ein eine Wärmeträgerflüssigkeit enthaltendes Rohr (13) und als ein das parallel einfallende Sonnenlicht (12) sammelndes optisches Element eine lineare Fresnel-Linse (10), die einander derart zugeordnet sind, daß das Licht durch die Fresnel-Linse (10), auf das, die Wärmeträgerflüssigkeit enthaltende, Rohr (13) gerichtet auftrifft. Die lineare Fresnel-Linse (10) besteht aus transparentem Kunststoff, insbesondere aus Acrylglas. Zweckmäßigerweise ist das Rohr (13) so gestaltet, daß es möglichst stark absorbiert; Dieser Zweck wird beispielsweise durch eine matt-schwarze Einfärbung des Materials erreicht.

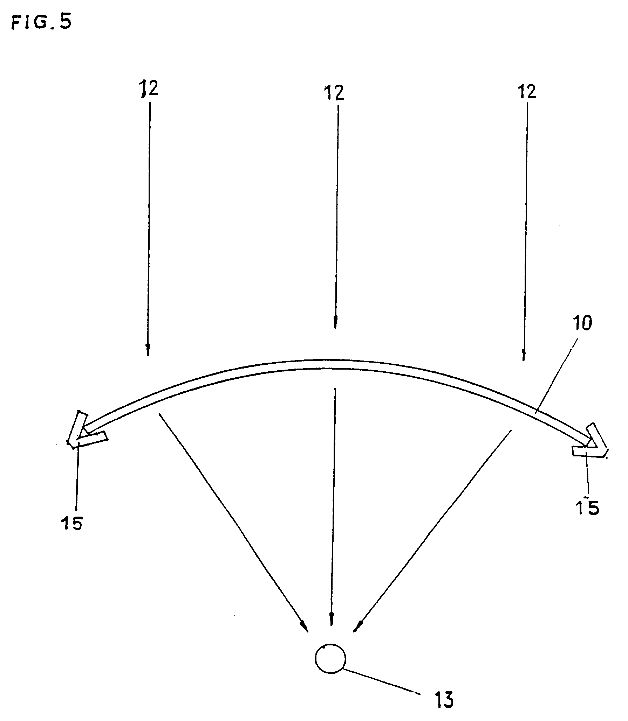

Das Sonnenkollektorensystem arbeitet in der Weise, daß das parallel einfallende Sonnenlicht auf die plane Oberfläche der linearen Fresnel-Linse auftrifft, welche das Licht sammelt und auf das im physikalisch richtigen (experimentell leicht bestimmbaren) Abstand fixierte, die Wärmeträgerflässigkeit enthaltende Rohr (13) richtet und damit die Wärmeträgerflüssigkeit erwärmt. Die Weiterleitung bzw. Übertragung der Wärme geschieht in an sich bekannter Weise. Die erfindungsgemäß hergestellten Sonnenkollektoren sind in ihrem schematischen Aufbau in FIG. 4 und 5 wiedergegeben.
In einer üblichen Ausführungsform, die indessen Variationen zuläßt, beträgt die Dicke der hergestellten Tafel (10) etwa 6 mm. Die Stufenbreite der Fresnel-Linse beträgt 4 mm. Bei einer Brennweite von 1000 mm wird eine Breite der Brennlinie von 15 mm erreicht (bei Durchstrahlung der Tafel mit Sonnenlicht). Das Sonnenlicht wird dadurch um den Faktor 26,7 konzentriert. Bei einer eingestrahlten Leistung von 1000 W/m² kann auf ein Rohr mit 15 mm Durchmesser eine Leistung von 400 W/m eingestrahlt werden.
Anstelle eines linearen Parabolspiegels (14) wie im Stand der Technik, in dessen Brennlinie das parallel durch ein Rohr einfallende Licht fokussiert wird, steht erfindungsgemäß als lichtsammelndes Element die lineare Fresnel-Linse (10). In einer speziellen Ausgestaltung kann die lineare Fresnel-Linse (10) auch unter leichter Verspannung im Sonnenkollektorsystem fixiert sein (FIG. 5), um den Einfluß der Wärmedehnung aufzufangen und somit ein undefiniertes Beulen auszuschließen. In diesen Fällen muß der Einfluß der Krümmung bei der Festlegung der Fresnel-Struktur berücksichtigt werden.

Das erfindungsgemäße Verfahren kann wie folgt durchgeführt werden: (FIG. 1) Die Extrusionsanlage ist im wesentlichen aufgebaut aus einem Hauptextruder (1), einem Coextruder (2) und einem Werkzeug zur Koextrusion (3).
Die maximale Breite der extrudierten Platten wird durch das Coextrusions-Werkzeug bestimmt. Im allgemeinen sind die extrudierten Platten 800 bis 2200 mm breit. Ihre Dicke wird ebenfalls durch die Bedingungen der Coextrusion limitiert; im allgemeinen liegt sie bei 0,5 bis 25 mm, wobei die aus der Formmasse NF gebildete Schicht in erster Linie durch die mit der Strukturierung intendierte Funktion bestimmt wird. Im allgemeinen liegt deren Schichtdicke jedoch bei 0,2 bis 5 mm.
Die durch den Hauptextruder (1) auf geeignete Temperatur gebrachte Basisformmasse BF und die im Coextruder (2) auf geeignete Temperatur gebrachte niedrigviskose Formmasse NF werden im Coex-Werkzeug (3) zusammengeführt. Dabei ergeben sich für die Basisformmasse BF als Anhaltspunkt etwa die folgenden Düsentemperaturen:

| Basisformmasse BF | Verarbeitungstemperatur (Grad C) |
|---|---|
| PMMA | 240 |
| Hart-PVC (granuliert) | 185 |
| HDPE | 170 |
| SB | 210 |
| PP | 235 |
| POM | 200 |
| PS | 175 |

Das aus dem Coex-Werkzeug (3) austretende Coextrudat CX wird über das Dreiwalzen-Glättwerk bestehend aus den Walzen (4), (5) und (4') geleitet, wobei die mittlere Walze (5) als Prägewalze derart ausgelegt ist, daß ihre Oberfläche (7) das Negativ der gewünschten strukturierten Plattenoberfläche (8) darstellt. Zwischen den Walzen (4) und (5) befindet sich der Walzenspalt (6). Hier soll das Druckmaximum vor der engsten Stelle hoch sein, um möglichst viel Prägekraft übertragen zu können. Das Dreiwalzen-Glättwerk entspricht im übrigen dem Stand der Technik. Die extrudierten Tafeln (10) mit strukturierter Oberfläche (8) werden über Stützrollen (11) transportiert. Anschließend können sie auf die gewünschte Länge geschnitten werden. Das Profil (9) stellt dann ein exaktes Abbild der Prägewalzenoberfläche (7) dar.

### Vorteilhafte Wirkungen

Die erfindungsgemäß hergestellten Kunststoff-Tafeln zeichnen sich durch eine hohe Abbildungsgenauigkeit bei der Strukturierung und eine sehr fein ausgeprägte Strukturierung aus. Sie eignen sich für eine Vielzahl von Aufgaben, wobei die optischen Eigenschaften im Vordergrund stehen. Mit ausgezeichnetem Erfolg lassen sich z.B. sowohl zentrische als lineare Fresnel-Linsen, desweiteren Semihologramme, u.ä. herstellen.
Bekannte technische Anwendungen für Fresnel-Linsen, z.b. bei Pojektionsschirmen, Overheadprojektoren, Filter für Bühnenscheinwerfer, Rundumsichtlinsen für Rückscheiben von Fahrzeugen wie Lieferwagen, Wohnmobilen, Linsen für Leuchtfeuer u.ä. werden durch das erfindungsgemäße Verfahren leichter zugänglich.
Lineare Fresnel-Linsen haben neuerdings eine besonderes interessante Anwendung als Licht-Sammellinsen in Sonnenkollektoren gefunden.

Die Vorteile der erfindungsgemäßen Sonnenkollektoren gehen in erster Linie auf die Verwendung der linearen Fresnel-Linsen (3) beispielsweise aus Acrylglas zurück.
Die Vorteile derartiger linearer Fresnel-Linsen sind u.a.:
- Die Herstellungmöglichkeit per Extrusionsverfahren und damit der niedrige Preis
- das geringe Gewicht
- die einfache, ggfs. automatische Reinigung.

### Legende der Abbildungen:

FIG. 1 stellt die Extrusionsanlage dar, bestehend aus Hauptextruder (1), Coextruder (2) und Werkzeug zur Koextrusion (3), ferner dem Glättwerk, aufgebaut aus den Walzen (4), (5) und (4') mit der mittleren Walze (5) als Prägewalze, deren Oberfläche (7) das Negativ der Plattenoberfläche (8) darstellt. Zwischen den Walzen (4) und (5) befindet sich der Walzenspalt (6). Die extrudierten Tafeln (10) mit strukturierter Oberfläche (8) laufen über Stützrollen (11).
FIG. 2 gibt das Dreiwalzen-Glättwerk aus den Walzen (4) und (4') und der Prägewalze (5) mit dem Walzenspalt (6) detailliert wieder.
FIG. 3 zeigt die aus einer normalen Linse durch Unterteilung der Linse in Segmente und Parallelverschiebung einer Oberfläche jedes Segments hervorgegangene Fresnellinse (12) bezeichnet einen einfallenden Lichtstrahl.
FIG. 4a) stellt ein Sonnenkollektorensystem des Standes der Technik dar. Als Licht-Kollektor-Einheiten dienen lineare Parabolspiegel aus bedampftem Glas (14) in deren Brennlinie ein Rohr (13) fixiert ist, das von einer Wärmeträgerflüssigkeit durchströmt wird.
FIG. 4b) stellt den erfindungsgemäßen Sonnenkollektor dar, enthaltend ein die Wärmeträgerflüssigkeit führendes Rohr (13) und als lichtsammelndes optisches Element eine lineare Fresnel-Linse (10) aus transparentem Kunststoff.
FIG. 5 zeigt eine spezielle Ausgestaltung der Erfindung, wobei die lineare Fresnel-Linse (12) unter leichter Verspannung im Sonnenkollektorensystem verspannt ist. (15) bedeutet die Einspannung.

## Patentansprüche

1. Verfahren zur Herstellung von Kunststoff-Tafeln mit sehr feinstrukturierter Oberfläche mittels einer mit Extruder und einem Dreiwalzen-Glättwerk, enthaltend eine Walze mit strukturgebender Oberfläche, ausgestatteten Extrusionsanlage,
dadurch gekennzeichnet,
daß die Anlage zur Coextrusion ausgelegt ist und die Kunststofftafeln über zwei Extruder als Coextrudat CX aus einer hochviskosen Basisformmasse BF und einer aufextrudierten niedrigviskosen Formmasse NF hergestellt und über das Drei-Walzen-Glättwerk oberflächlich strukturiert werden.

2. Verfahren gemäß Anspruch 1, dadurch gekennzeichnet, daß die niedrigviskose Formmasse NF noch Trennmittel TM enthält.

3. Verfahren gemäß Anspruch 1, dadurch gekennzeichnet, daß die gewünschte Struktur in die niedrigviskose Formmasse NF eingeprägt wird.

4. Verfahren gemäß Anspruch 1, dadurch gekennzeichnet, daß die Temperatur der Prägewalze bis zu 70 Grad C über der Glastemperatur der niedrigviskosen Formmasse NF liegt.

5. Verfahren gemäß den Ansprüchen 1 bis 4, dadurch gekennzeichnet, daß man Kunststoff-Tafeln mit der Oberflächenstruktur einer Fresnel-Linse herstellt.

6. Verfahren gemäß Anspruch 5, dadurch gekennzeichnet, daß man Kunststoff-Tafeln mit der Oberflächenstruktur einer linearen Fresnel-Linse herstellt.

7. Verfahren gemäß den Ansprüchen 1 bis 6, dadurch gekennzeichnet, daß die Basisformmasse BF ein Acrylharz ist.

8. Verwendung der Kunststoff-Tafeln mit der Oberflächenstruktur einer linearen Fresnel-Linse gemäß den Ansprüchen 5 - 7 als lichtsammelndes optisches Element in Sonnenkollektoren.

9. Sonnenkollektoren enthaltend mindestens ein eine Wärmeträgerflüssigkeit enthaltendes Rohr (13) und als lichtsammelndes optisches Element eine lineare Fresnel-Linse (10) die einander derart zugeordnet sind, daß das Licht durch das lichtsammelnde optische Element auf das die Wärmeträgerflüssigkeit enthaltende Rohr (23) gerichtet, auftrifft,
dadurch gekennzeichnet, daß die Fresnellinse (10) nach einem Verfahren gemäß Anspruch 6 hergestellt ist.

## Claims

1. Process for producing plastic sheets having a very finely structured surface by means of an extrusion apparatus equipped with an extruder and a three-roller finishing machine, containing a roller with a structure-generating surface, characterised in that the apparatus is designed for coextrusion and the plastics sheets are produced, using two extruders, as coextruded material CX comprising a high-viscosity basic moulding composition BF and a low-viscosity moulding composition NF extruded on to it, and the plastics sheets are given a surface structure by means of the three-roller finishing machine.

2. Process according to claim 1, characterised in that the low-viscosity moulding composition NF also contains mould release agents TM.

3. Process according to claim 1, characterised in that the desired structure is embossed into the low-viscosity moulding composition NF.

4. Process according to claim 1, characterised in that the temperature of the embossing roller is up to 70 °C above the glass transition temperature of the low viscosity moulding composition NF.

5. Process according to claims 1 to 4, characterised in that plastic sheets are produced having the surface structure of a Fresnel lens.

6. Process according to claim 5, characterised in that plastic sheets are produced having the surface structure of a linear Fresnel lens.

7. Process according to claims 1 to 6, characterised in that the basic moulding composition BF is an acrylic resin.

8. Use of the plastic sheets having the surface structure of a linear Fresnel lens according to claims 5 to 7 as a light-collecting optical element in solar collectors.

9. Solar collectors containing at least one tube (13) containing a heat-carrying liquid and, as the light-collecting optical element, a linear Fresnel lens (10), which are associated with one another so that the light directed through the light-collecting optical element strikes the tube (23) containing the heat-carrying liquid, characterised in that the Fresnel lens (10) is produced by a process according to claim 6.

## Revendications

1. Procédé de fabrication de plaques de matière plastique à surface structurée de façon extrêmement fine au moyen d'une installation d'extrusion munie d'une extrudeuse et d'un laminoir à trois rouleaux contenant un rouleau à surface structurante,
caractérisé en ce que
l'installation est disposée pour la co-extrusion, et les plaques de matière plastique sont fabriquées par deux extrudeuses sous forme de produit de co-extrusion CX fait d'une masse à mouler de base très visqueuse BF et d'une masse à mouler à basse viscosité extrudée NF, et dont les surfaces sont structurées par le laminoir à trois rouleaux.

2. Procédé selon la revendication 1,
caractérisé en ce que
la masse à mouler à basse viscosité NF contient encore un agent séparateur TM.

3. Procédé selon la revendication 1,
caractérisé en ce que
la structure désirée est estampée dans la masse à mouler à basse viscosité NF.

4. Procédé selon la revendication 1,
caractérisé en ce que
la température du cylindre d'estampage se situe jusqu'à 70°C au-dessus de la température de transition vitreuse de la masse à mouler à basse viscosité NF.

5. Procédé selon les revendications 1 à 4,
caractérisé en ce qu'
on fabrique des plaques de matière plastique ayant la structure superficielle d'une lentille de Fresnel.

6. Procédé selon la revendication 5,
caractérisé en ce qu'
on fabrique des plaques de matière plastique ayant la structure superficielle d'une lentille de Fresnel linéaire.

7. Procédé selon les revendications 1 à 6,
caractérisé en ce que
la masse à mouler de base BF est une résine acrylique.

8. Utilisation des plaques de matière plastique à structure superficielle d'une lentille de Fresnel linéaire selon les revendications 5 à 7 comme élément optique collecteur de lumière dans les capteurs solaires.

9. Capteurs solaires comprenant au moins un tube (13) contenant un liquide caloporteur et, comme élément optique collecteur de lumière, une lentille de Fresnel linéaire (10) qui sont disposés l'un par rapport à l'autre de manière que la lumière frappe l'élément optique collecteur de la lumière sur le tube (13) contenant le liquide caloporteur,
caractérisé en ce que
la lentille de Fresnel (10) est fabriquée selon un procédé de la revendication 6.
